# FASCICULE DE BREVET EUROPEEN

(11) **EP 3 426 998 B1**
(45) Date de publication et mention de la délivrance du brevet: **03.05.2023**
(21) Numéro de dépôt: 17715217.0
(22) Date de dépôt: 09.03.2017
(51) Int. Cl.: F28D 20/02, H01M 10/659, H01M 50/24

(54) **BARRIÈRE THERMIQUE EN PARTICULIER POUR BATTERIE(S) AINSI POURVUE(S)**
WÄRMEDÄMMUNG, INSBESONDERE FÜR BATTERIE/BATTERIEN DAMIT
THERMAL BARRIER IN PARTICULAR FOR A BATTERY/BATTERIES PROVIDED THEREWITH

(30) Priorité: 11.03.2016 FR 1652072
(43) Date de publication de la demande: 16.01.2019
(73) Titulaire: Hutchinson, 75008 Paris (FR)
(72) Inventeur: CHOPARD, Fabrice, 38400 Saint Martin d`Heres (FR); HUILLET, Cédric, 45200 Montargis (FR); GEFFRAY, Fanny, 35000 Rennes (FR); JOVANOVIC, Dragisa, 45290 Pressigny les Pins (FR)
(74) Mandataire: Ernest Gutmann - Yves Plasseraud S.A.S.
(86) Numéro de dépôt international: PCT/FR2017/050538
(87) Numéro de publication internationale: WO 2017/153691

(56) Documents cités:
- EP-A1- 2 540 925
- EP-B1- 2 540 925
- WO-A1-2011/116076
- WO-A2-01/61778
- WO-A2-2008/011540
- WO-A2-2012/170691
- WO-A2-2013/040404
- DE-A1-102011 086 799
- US-A1- 2005 178 524
- US-A1- 2013 221 013

## Description

La présente invention concerne le domaine de la gestion thermique.

Est concernée en particulier un ensemble comprenant un dispositif de gestion thermique (appelé aussi barrière) a priori à fonctionnement passif, pour favoriser, dans un volume intérieur et/ou vis-à-vis d'un élément producteur temporaire de chaleur qui y est disposé, un maintien d'une température dans une plage prédéterminée. Un tel dispositif comprenant les caractéristiques du préambule de la revendication 1 est connu de WO 01/61778.

Sont de la sorte en particulier concernés les installations électriques qui chauffent, telles que les batteries d'accumulateurs électriques.

Dans une batterie, ou une série de batteries assemblées en série ou en parallèle, il peut être très utile de pouvoir réguler la température opérationnelle des cellules qui chauffent quand elles produisent de l'électricité.

Dans ce contexte, on conçoit qu'il puisse être utile de pouvoir tant isoler de l'environnement extérieur ledit volume et/ou son contenu, et même plus finement d'y gérer la température à l'intérieur de marges opérationnelles, que de retarder la propagation d'un flux thermique perturbateur vers ce volume, et/ou de lisser la température dans ledit volume ou dans une partie au moins d'une paroi avec lequel il peut être en contact.

C'est dans ce contexte qu'est ici proposé un ensemble comprenant, comme précité, un dispositif de gestion thermique, comprenant les caractéristiques de la revendication 1.

En pratique, le dispositif précité définira une paroi autour d'une partie au moins dudit volume intérieur, sera intégré à une paroi « de base » (à but structurel) ou la doublera.

Le terme « entouré » ou « autour » est à comprendre comme se référant à un élément (paroi, dispositif...) limitant au moins localement, par exemple d'un côté ou sur une face, le volume intérieur. Ainsi, ledit volume intérieur ne sera pas nécessairement totalement entouré par cet élément.

Les matériaux isolants thermiques permettent de limiter les échanges de chaleur entre intérieur et extérieur. Et un MCP permet un lissage des pics de températures par exemple tout au long d'une journée, voire de l'année et/ou d'intervenir sur le moment où une température est atteinte. Un intérieur à préserver peut ainsi être moins chaud la journée, par temps chaud, et moins froid la nuit, par temps froid.

Combiner les deux a donc tout son sens, ceci d'autant plus, même si ce principe se complique, quand il faut gérer thermiquement un espace dans lequel la température peut varier et qui doit être installé dans un environnement difficile, avec des gradients de température pouvant éventuellement atteindre plusieurs dizaines de °C.

Combiner une isolation thermique avec un complexe de MCP chauds (second matériau MCP) et MCP froids (premier matériau MCP) doit être efficace eu égard aux buts visés.

Pour la performance de l'isolation thermique, il est conseillé que ledit au moins un élément isolant thermique soit disposé dans une enveloppe sous vide, pour définir au moins un panneau isolant sous atmosphère contrôlée, PIV, où sera en de préférence logée aussi une partie au moins des matériaux MCP.

Ces panneaux PIV définiront des structures assez rigides, même s'ils sont conditionnés de sorte à comprendre au moins une enveloppe fermée, étanche, constituée d'au moins une feuille déformable.

Pour structurer lesdits premier(s) et second(s) matériaux MCP, l'invention prévoit de les inclure, de l'intérieur vers l'extérieur, dans :
- optionnellement un premier élément contenant au moins un second matériau MCP,
- un second élément contenant plusieurs premiers matériaux MCP,
- un troisième élément contenant au moins un second matériau MCP.

Par opposition avec les structures PIV assez rigides précitées, le premier élément contenant au moins un matériau MCP définira de préférence une couche déformable adaptée à absorber une déformation des moyens de production de chaleur et à lisser des points chauds qu'ils auraient induits.

Il se peut en effet que des points chauds locaux soient créés par les moyens de production de chaleur, ou encore qu'au moins dans le cas d'une batterie, par exemple dans une « cellule poche » (pouch cell battery), il faille gérer le problème d'une déformation de certains moyens.

Encore pour la performance de l'isolation thermique, il est conseillé, éventuellement en combinaison, totale ou partielle:
- que chaque élément isolant contienne un matériau poreux,
- que lesdits premier et/ou second matériaux MCP comprennent individuellement (l'un, l'autre ou les deux) plusieurs matériaux MCP à températures de changement d'états différentes, graduant ainsi les effets,
- que ledit au moins un élément isolant thermique soit interposé entre les premier(s) et second(s) matériaux MCP, avec un effet protecteur accru,
- que ledit dispositif comprenne plusieurs dits éléments isolants thermiques disposés à plusieurs des emplacements suivants :
   -- entre deux des premier, second et troisième éléments,
   -- à l'extérieur dudit troisième élément (ainsi on dissociera les blocs MCP et on bloquera ou retardera la circulation des flux entre deux tels blocs),
- que, de l'intérieur vers l'extérieur, les matériaux MCP des second et/ou troisième éléments aient des températures de changement d'état qui croissent, favorisant ainsi une gestion thermique par strates et améliorant de la sorte l'efficacité de cette gestion.

Parmi les difficultés de la gestion thermique, il y a aussi celle de l'évacuation de l'énergie stockée dans le/chaque élément contenant un MCP.

Pour concourir à la mise en place d'une solution pertinente, l'invention prévoit que l'un au moins des second et troisième éléments soit traversé par des canaux de circulation d'un fluide, en échange thermique avec le(s) matériau(x) MCP.

Utiliser de l'air, et d'autant plus sous convection naturelle, satisfera en outre la recherche d'un fonctionnement passif de la barrière thermique.

Au sein des moyens de production de chaleur, il se peut par ailleurs que la température puisse à certains moments tendre vers les limites, sans les dépasser, de sorte qu'il peut être adapté de ne déclencher l'intervention des second et troisième éléments contenant un MCP qu'au-delà de certaines conditions opératoire.

Aussi est-il proposé que la barrière comprenne en outre un interrupteur thermique disposé entre lesdits premier et second éléments. Un interrupteur thermique est un organe de liaison thermique sélective. L'interrupteur possède une mauvaise conduction thermique tant qu'il n'est pas activé (par exemple une conductivité thermique comprise typiquement entre 0,1 mW/m.K et 0,5W/m.K à 20°C et à pression atmosphérique). Lorsque l'interrupteur thermique est activé il devient un bon conducteur thermique (par exemple comprise entre 1 et 10W/m.K).

Et pour compléter une telle capacité à gérer dans les couches les plus internes de la barrière le contrôle des températures immédiatement proches de la gamme normale de fonctionnement, il est proposé que, de l'intérieur vers l'extérieur, entre l'interrupteur thermique et le second élément contenant un matériau MCP soit interposés un espace traversé par des canaux de circulation d'un fluide et au moins un dit élément isolant thermique.

Isoler les MCP chauds des MCP froids favorisera les effets barrières recherchés ainsi que les capacités de ces MCP à se régénérer en retrouvant l'état leur permettant de nouveau d'absorber de l'énergie.

Aussi est-il conseillé :
- que soient prévus plusieurs dits quatrièmes éléments, isolants thermiques interposés entre individuellement entre les premier et second éléments contenant un matériau MCP et entre les second et troisième éléments contenant un matériau MCP, ainsi qu'à l'extérieur dudit troisième élément,
- et/ou que le second élément contenant un matériau MCP comprenne plusieurs couches de matériaux contenant chacune un matériau MCP et ayant individuellement des températures de changement d'état différentes les unes des autres, un des quatrièmes éléments, isolant thermique, étant interposé entre deux dites couches.

Par ailleurs les effets barrières seront aussi favorisés si l'un au moins des second et troisième éléments comprend plusieurs matériaux MCP dispersés ou plusieurs couches de matériaux contenant chacune un matériau MCP, lesdits matériaux MCP ayant des températures de changement d'état différentes les unes des autres.

Parmi lesdits moyens de production de chaleur, on retiendra en particulier le cas où ils comprendront des cellules d'une batterie électrique, ou d'une série de batteries assemblées en série ou en parallèle, et productrice(s) de chaleur.

Dans ce cas, la gestion thermique des cellules, ou globalement des batteries, sera favorablement assurée globalement, par une sorte d'enceinte périphérique pourvue dudit dispositif et ayant de préférence, comme plage de températures prédéterminée entre 25 et 35°C à maintenir, pour des cellules prismatiques, et de 45°C à 55°C pour les « cellules poches », le tout à 5°C près.

Spécifiquement dans l'application batterie(s) électrique(s), il est par ailleurs conseillé :
- que la température de changement d'état du MCP le plus froid soit comprise entre 25°C et -30°C, de préférence entre 20°C et -20°C,
- et que celle du MCP le plus chaud, situé dans la dernière couche la plus extérieure, soit comprise entre 30°C et 55°C, de préférence entre 40°C et 45°C.

De la sorte on pourra tendre vers un fonctionnement où, quelles que soient les conditions extérieures rencontrées, typiquement entre -20°C (hiver/froid) et 45°C (été/chaud), et pour une période de temps de 8 à 15 heures, il sera possible de maintenir une batterie placée dans un véhicule à une température interne comprise dans la/les gamme(s) précitée(s), en utilisant des MCP existants et avec une épaisseur globale de couches contenant du MCP de quelques mm à quelques dizaines de mm au maximum, et par exemple 2 à 10 couches successives de MCP froids et chauds, respectivement, ou l'équivalent avec des MCP dispersés .

Ainsi, il sera possible de gérer thermiquement l'évolution dans le temps des électrolytes, des anodes et/ou des cathodes d'un lot de cellules d'un bloc batterie de véhicule, voire d'autres installations électriques pour améliorer la durée de vie et l'efficacité du système de production d'énergie.

Si nécessaire, l'invention sera encore mieux comprise et d'autres caractéristiques, détails et avantages de celle-ci apparaîtront encore à la lecture de la description qui suit, faite à titre d'exemple non limitatif et en référence aux dessins annexés, dans lesquels :
- la figure 1 schématise l'implantation d'une ou plusieurs batterie(s) gérée(s) thermiquement, sur un véhicule se déplaçant sous l'impulsion d'au moins un moteur thermique ou électrique;
- la figure 2 détaille davantage le schéma de gestion thermique d'une ou plusieurs telle(s) batterie(s);
- la figure 3 schématise les échanges fonctionnels liés à cette gestion thermique ;
- la figure 4 schématise une dispersion de plusieurs MCP dans une matrice support ;
- les figures 5-8 schématisent des circuits fluidiques pouvant participer à une gestion thermique perfectionnée ;
- et les figures 9-10 schématisent deux manières de conditionner ensemble des MCP et isolant thermique.

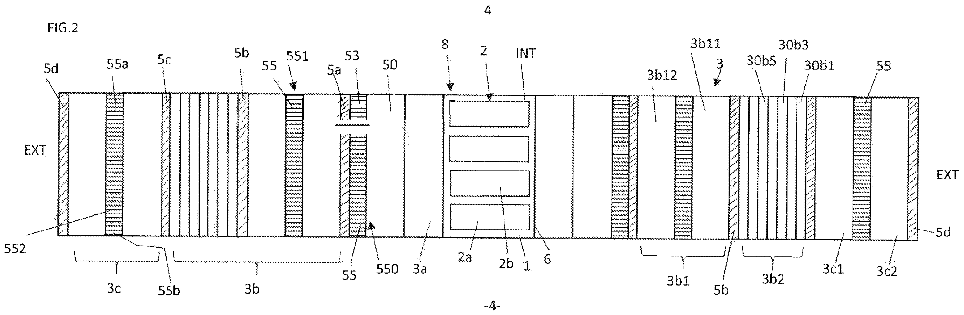

Concernant les coupes des figures 2 et 5-8, elles doivent être comprises comme impliquant que la paroi ou barrière s'étendra favorablement tout autour du volume 1.

A toute fin, il est par ailleurs confirmé qu'un matériau à changement de phase - ou MCP - désigne ici un matériau capable de changer d'état physique, entre solide et liquide, dans une plage de température restreinte comprise entre -25°C et 50°C, voire entre -35°C et 60°C. Le transfert de chaleur (ou transfert thermique) peut s'opérer par utilisation de sa Chaleur Latente (CL) : le matériau peut alors stocker ou céder de l'énergie par simple changement d'état, tout en conservant une température sensiblement constante, celle du changement d'état.

Le(s) matériau(x) thermiquement isolant(s) associé(s) au(x) MCP pourra(ont) être un isolant « simple » comme de la laine de verre, mais on préfèrera certainement une mousse, par exemple de polyuréthane ou de polyisocyanurate, ou encore plus favorablement un matériau thermiquement isolant poreux, voire nano-poreux, disposé dans une enveloppe sous vide, pour définir au moins un panneau isolant sous vide, PIV.

Par « PIV », on entend une structure sous « atmosphère contrôlée », c'est-à-dire soit remplie par un gaz ayant une conductivité thermique inférieure à celle de l'air ambiant (26mW/m.K), soit en « dépression », donc sous une pression inférieure à la pression ambiante (donc < 10⁵Pa). Une pression entre 10⁰Pa et 10⁴Pa dans l'enceinte pourra en particulier convenir. L'enceinte pourra contenir au moins un matériau isolant thermique a priori poreux (tailles de pores inférieures à 1micron). Dans ce cas, la performance de la gestion thermique à assurer sera encore améliorée, voire le poids d'ensemble diminué par rapport à un autre isolant. Typiquement, les panneaux PIV (VIP en anglais) sont des isolants thermiques où au moins un matériau poreux, par exemple en gel de silice ou poudre d'acide silicique (SiO2), sont pressés en plaque et entourés chacun, sous vide d'air partiel, d'une feuille enveloppante étanche aux gaz, par exemple en matière plastique et/ou ou aluminium laminé. Le vide obtenu permet typiquement d'abaisser la conductivité thermique à moins de 0,01/0,020 W/m·K environ dans les conditions d'utilisation. On obtient ainsi une efficacité d'isolation 3 à 10 fois supérieure à celle de matériaux isolants plus classiques.

« Poreux » désigne un matériau possédant des interstices permettant le passage de l'air. Les matériaux poreux, à cellules ouvertes, incluent donc les mousses mais également les matériaux fibreux (tels que la laine de verre ou de roche). Les interstices de passage que l'on peut qualifier de pores ont des tailles inférieures à 1 ou 2mm de façon à pouvoir garantir une bonne isolation thermique, et de préférence à 1micron, et préférentiellement encore à 1 à 2×10⁻⁸m (structure quasiment nanoporeuse), pour des questions en particulier de tenue au vieillissement et donc de possible dépression moins forte dans l'enveloppe PIV.

« Conformable » correspond à une structure que l'on peut déformer, par exemple plier, à la main. Et « scellable » concerne une liaison soudable, notamment thermosoudable, voire brasable, avec des feuilles ou des films (plus fins), en particulier.

Ceci précisé, on va dans ce qui suit traiter à titre d'exemple privilégié du cas d'un pack de batterie d'accumulateurs globalement entouré d'une barrière thermique répondant à tout ou partie des caractéristiques précitées.

Dans cette application « batterie(s) » (en tant qu'exemple d'installation électrique pouvant bénéficier de la barrière thermique ici présentée), l'invention se propose donc, quelles que soient dans une certaine mesure les conditions extérieures (chaud ou froid), de participer au maintien du pack concerné de cellules ou de batteries) dans une plage de température optimale, à partir d'un système passif.

Ainsi, la solution proposée est-elle ici préférentiellement prévue pour fonctionner sans apport d'énergie froide ou chaude extérieure (à la batterie), ni de prélèvement d'énergie électrique produite par la batterie, être légère et peu encombrante, de là le caractère « passif » de la gestion thermique réalisée.

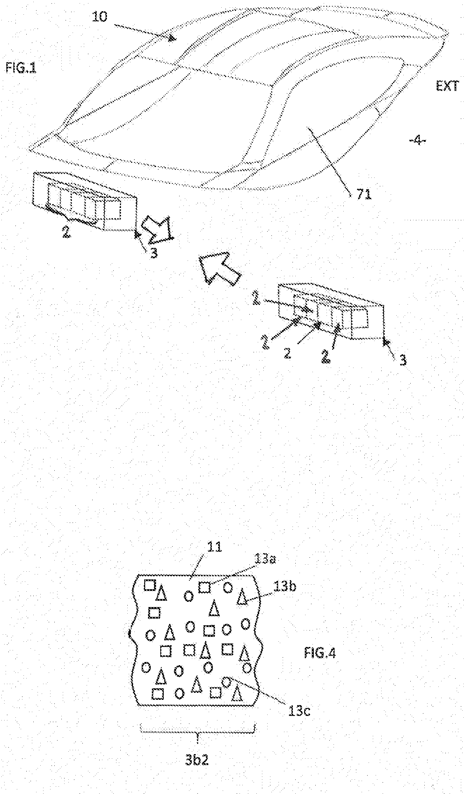

Notamment les figures 1,2 montrent donc le principe de la solution développée, dans l'exemple non limitatif de la gestion thermique d'une batterie d'accumulateurs.

Dans un volume central 1 à protéger sont disposées une série de cellules 2a,2b..., comme schématisé figure 2, d'une unique batterie 2 ou plusieurs telles batteries 2. La différence est que le dispositif de gestion thermique, ou barrière thermique, 3 sera, dans le véhicule :
- soit individuel : une barrière thermique 3 par batterie, laquelle est électriquement connectée avec l'extérieur (solution de gauche figure 1),
- soit global : une barrière thermique 3 entourant l'ensemble de toutes les batteries, chacune électriquement connectée avec l'extérieur (solution de droite figure 1).

La, chaque, batterie est prismatique dans l'exemple, avec donc une plage prédéterminée de températures à y maintenir supposée comprise entre 25°C et 35°C, à 5°C près.

Ces cellules accumulateurs chauffent quand elles produisent de l'électricité. Chaque cellule comprend un volume central renfermant un électrolyte, une anode et une cathode, le tout dans une enveloppe pouvant comprendre une couche de MCP ayant une température de fusion d'environ 35°C et une couche d'isolant thermique placée sous vide d'air partiel, pour constituer une structure PIV.

Le volume 1 est entouré d'un dispositif de gestion thermique, ou barrière thermique, 3.

Typiquement, la barrière 3 entourant la batterie 2 sera disposé à bord d'un véhicule 10, tel une automobile, voire un bateau ou autre. Ainsi, l'environnement 4 auquel sera soumis la barrière 3 sera celui rencontré par le véhicule se trouvant là où son utilisateur l'emploiera.

Ce qui est visé est de maintenir la température du, ou dans le, volume 1 à l'intérieur d'une plage prédéterminée, alors que la barrière 3 est placée dans cet environnement extérieur 4 qui peut donc être à température non constante.

A cette fin, la barrière 3 comprend au moins :
- de l'intérieur (INT), où il y a échange thermique avec le volume intérieur 1 ou les moyens qui y sont disposés (batterie ici), vers l'extérieur (EXT) :
   -- un premier élément 3a contenant au moins un matériau MCP stockant ou cédant de l'énergie thermique par changement d'état et ayant une première température de changement d'état (T1 ; ci-après MCP chaud),
   -- un second élément 3b contenant au moins un matériau MCP (ci-après MCP froid) ayant une seconde température de changement d'état (T2), inférieure à la première,
   -- un troisième élément 3c contenant au moins un matériau MCP (ci-après de nouveau MCP chaud) ayant une troisième température de changement d'état (T3) supérieure à la seconde (T2),
- et au moins un quatrième élément, isolant thermique (5a,5b,5c,5d), disposé :
   -- entre deux des premier, second et troisième éléments contenant un matériau MCP,
   -- et à l'extérieur dudit troisième élément (3c).

Le, et en pratique chaque, quatrième élément isolant thermique 5a-5d comprendra favorablement un matériau isolant poreux, voire nano-poreux conditionné comme un panneau PIV.

Et les éléments 3a-3c contiendront (au moins) un matériau MCP dans le sens où ils seront réalisés exclusivement ou non avec un matériau pur ou plus probablement en mélange dans une matrice, avec des charges.

En tant que constitution de l'un au moins de ces éléments 3a-3c, on pourra prévoir une composition de caoutchouc telle que décrite dans EP2690137 ou dans EP2690141, à savoir dans le second cas une composition réticulée à base d'au moins un élastomère silicone « RTV » vulcanisé à température ambiante et comprenant au moins un matériau MCP, ledit au moins un élastomère silicone présentant une viscosité mesurée à 23°C selon la norme ISO 3219 qui est inférieure ou égale à 5000 mPa.s. Dans ce cas, la matrice élastomère sera majoritairement constituée (i.e. selon une quantité supérieure à 50 pce, de préférence supérieure à 75 pce) d'un ou de plusieurs élastomères silicones « RTV ». Le matériau MCP thermique pourra être constitué de n-hexadécane, d'eicosane ou d'un sel de calcium, tous présentant des points de fusion inférieurs à 40° C.

L'autre (ou au moins un autre) de ces éléments pourra être à base de paraffine, d'acide gras eutectique (myristique-caprique) ou de sel hydraté eutectique (chlorure de calcium + potassium). D'autres possibilités existent, comme un MCP imprégné dans un réseau poreux.

Pour favoriser au mieux la préservation thermique de la batterie, il est conseillé de scinder en plusieurs sous-couches tout ou partie des éléments à constitution MCP. Ainsi, on préfèrera :
- que l'au moins, et ici les deux, second et troisième éléments (3b,3c) comprenne plusieurs sous-couches de matériaux contenant chacune un matériau MCP, telles les sous-couches respectivement 30b1,30b3,30b5 et 3c1,3c2 ayant individuellement des températures de changement d'état différentes les unes des autres,
- et même que pour l'un au moins des deux dits second et troisième éléments (3b2,3c), ces températures de changement d'état croissent de la première sous-couche la plus intérieure à la dernière sous-couche la plus extérieure.

Dans ce dernier cas, l'avantage de prévoir des températures de changement d'état qui croitront sera d'échelonner les effets de barrières thermiques attendus.

Ainsi, on pourra prévoir :
- au moins deux couches 3c1,3c2 pour l'élément protecteur à MCP chauds le plus extérieur, avec donc deux températures de changement d'état, par exemple une, de fusion, plus basse Tf1 =35°C pour la couche la plus intérieure 3c1 et une autre, plus haute Tf2 =40°C pour la couche la plus extérieure 3c2 ;
- plus de deux couches, par exemple dix couches, 30b1...30b3, avec donc autant de températures de changement d'état (ici de cristallisation Tci), s'échelonnant par exemple par tranche de 5°C, entre -20°C (couche la plus extérieure) et 25°C (couche la plus intérieure), pour le sous-bloc 3b2 le plus extérieur des deux (3b1,3b2) de l'élément à base de MCP froids 3b,
- et deux couches séparées par un des espaces 53 à canaux 55, pour l'autre sous-bloc 3b1 (le plus intérieur des deux), avec par contre alors de préférence une même température de changement d'état pour les deux couches du sous-bloc 3b1; typiquement état cristallisé à 25°C et en dessous.

En pratique, il est probable que cette idée de « couches » successives sera matérialisée par la présence de plusieurs matériaux MCP dispersés dans une matrice, lesdits matériaux MCP ayant des températures de changement d'état différentes entre elles, échelonnées en fonction des besoins. Ainsi, a-t-on schématisé figure 4 une couche, telle la couche 3b2, où les sous-couches, 30b1...30b3 ont été remplacée par une seule, avec une matrice 11 dans laquelle sont dispersés plusieurs matériaux MCP, par exemple 13a,13b,13c, ayant des températures de changement d'états différentes. Favorablement, la matrice pourra être à base d'élastomère et poreuse, pour allier déformabilité et variation de conductivité en fonction de l'état solide ou liquide du/des MCP.

Quoi qu'il en soit, chaque matériau MCP (dit premier matériau) de l'élément 3b aura de la sorte une température de changement d'état (entre liquide et solide) inférieure ou égale à la température la plus basse de ladite plage prédéterminée (supposée ici de 25°C), pour, par changement d'états :
- céder de la chaleur (ou absorber de l'énergie dite froide) en cristallisant, retardant ainsi une propagation de froid de l'environnement extérieur vers le volume intérieur 1,
- et absorber de la chaleur (ou libérer de l'énergie froide stockée), en se liquéfiant sous la chaleur produite par l'élément 2 producteur de chaleur.

Par ailleurs, chaque second matériau MCP (dit second matériau) des éléments 3a et 3c aura une température de changement d'état supérieure ou égale à la température la plus haute de ladite plage prédéterminée (supposée ici de 35°C), pour, par changement d'états :
- absorber de l'énergie chaude en se liquéfiant, retardant ainsi une propagation d'énergie chaude de l'environnement extérieur vers le volume intérieur 1,
- et libérer de l'énergie chaude stockée, en cristallisant à une température inférieure ou égale à ladite température la plus haute de la plage prédéterminée.

La barrière 3 sera favorablement associée avec la paroi 6 d'un boitier 8 dans lequel pourra être enfermé le pack des cellules 2 ; voir schéma figure 2. En pratique, la barrière 3 pourra venir doubler la paroi 6 (plastique, composite, voire métallique) ou être intégrée à elle (par exemple par moulage).

Dans cette application à la gestion thermique d'une batterie, on doit comprendre que la barrière thermique 3 de la figure 2 fera en réalité tout le tour du volume 1. Toutes les faces de ce volume seront donc isolées de l'extérieur (EXT/4) par les couches de la barrière 3.

Boitier 8 et barrière 3 placés donc par exemple sur un véhicule automobile, plusieurs situations perturbatrices vont se présenter. Ainsi :
- si le milieu extérieur 4 subit une température supérieure à 35°C (temps chaud par exemple), alors il va y avoir tendance à ce que la température dans le volume 1 augmente,
- si le milieu extérieur 4 subit une température inférieure à 25°C, il va au contraire à y avoir tendance à une diminution de cette température interne.

Pour différencier ces situations de celle « de référence » où le fonctionnement de la batterie offre le meilleur rendement : ici entre 25°C et 35°C, un interrupteur thermique 50 a été disposé entre les premier 3a et second 3b éléments MCP.

Il pourra s'agir de plaques métalliques (cuivre ou aluminium par exemple) formant bilames, à matériau à mémoire de forme. Tant que la température de la couche 3a est inférieure à 25°C, l'interrupteur thermique 50 est en mode non passant, isolant ainsi la couche 3a des canaux 55. Lorsque la température de la couche 3a dépasse 35°C (température haute de la plage), l'interrupteur thermique 50 est en mode passant autorisant un contact entre la couche 3a et les canaux 55.

Pour parfaire le premier niveau interne de gestion thermique assuré par l'élément ou couche 3a à MCP chaud, qui dans l'exemple est donc liquéfié au-delà de 35°C, la barrière thermique intégrera favorablement, entre l'interrupteur thermique 50 et le second élément 3b à MCP froid (qui est donc cristallisé en dessous de 25°C) :
- tant un espace 53 traversé par des canaux 55 de circulation, par effet cheminée, d'(au moins)un fluide F,
- que l'une des couches, 5a, desdits quatrièmes éléments isolants thermiques, de fait la plus interne de ces couches thermiquement isolantes.

On notera figure 2 qu'une autre série de canaux 55 sépare l'élément 3b1 en deux parties, respectivement extérieure 3b11 et intérieure 3b12 qui peuvent être identiques en compositions. Et une troisième série 55 traverse de la même manière, part en part, une autre couche de MCP : celle repérée 3c.

Ceci forme trois échangeurs de chaleur, repérés respectivement 550,551 et 552 figure 2.

En effet un tel (quatrième) élément isolant thermique sera de préférence interposé successivement entre deux sous-blocs 3b1,3b2 de l'élément à base de MCP froid 3b (couche 5b), entre les éléments à base de MCP froid 3b et chaud 3c (couche 5c) et sur toute la périphérie extérieure de la barrière 3, autour de tout l'élément à base de MCP chaud 3c (couche 5d).

Chaque série de canaux 55 pourra se présenter comme une plaque ondulée de circulation de fluide, à ondulations parallèles.

Concernant la constitution en poches PIV, autant on l'appliquera favorablement à toutes ces couches thermiquement isolantes 5a-5d, voire on y intégrera aussi les couches à base de MCP froid 3b et chaud 3c pour une facilité de fabrication, manipulation et mise en oeuvre (voir ci-après), autant on ne l'appliquera pas à la couche 3a la plus interne, à base de MCP chaud.

En effet, cet élément ou couche 3a est prévu pour venir au contact des cellules de la batterie et donc pouvoir absorber au moins certaines déformations que ces cellules subissent quand elles chauffent.

Et du fait qu'elle est liquéfiée au-delà de 35°C la couche 3a va permettre d'absorber thermiquement d'éventuels points chauds nés d'une surchauffe isolée d'une cellule.

Quant aux canaux 55 de circulation de fluide, de préférence un gaz, tel en particulier que de l'air, on en trouvera favorablement en outre dans les éléments à base de MCP froid 3b et chaud 3c, afin de faciliter leur régénération (état liquéfié pour l'élément 3b et cristallisé pour l'élément 3c. Outre les couches thermiquement isolantes qui vont assurer un effet échelonné d'obstacles thermiques, ce sont donc les couches MCP respectivement chaude 3c et froide 3b qui, hors des plages de température ambiante 25°C =< TA =< 35°C et 25°C =< TB =< 35°C vont agir pour chercher à préserver cette gamme de température de fonctionnement optimal de la batterie.

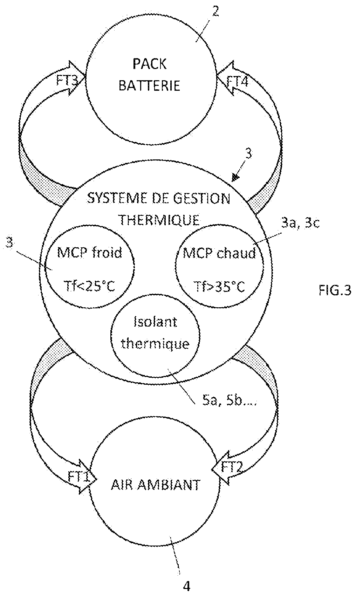

Si maintenant on appelle :
- EB l'état de fonctionnement de la batterie : ON (en fonctionnement) ou OFF (à l'arrêt),
- TA, la température variable du milieu extérieur (EXT/4), que l'on peut considérer comme susceptible d'évoluer entre -20°C et 45°C,
- et TB la température des cellules 2, qui est donc supposée à maintenir entre 25°C et 35°C, température qu'elles excèdent quand elles produisent de l'électricité et ne sont pas, comme ici, sous gestion thermique :
   les fonctions principales visant à cette gestion et communes aux couches thermiquement isolantes et à MCP chaud et froid sont les suivantes (voir schéma figure 3) :
- FT1 : pour TA =<25°C et batterie dans un état EB OFF, limiter l'action du froid ambiant sur le refroidissement de la batterie,
- FT2 : pour TA >= 35°C, limiter l'action de la chaleur ambiante sur le réchauffement de la batterie,
- FT3 : pour TB =<35°C, limiter que la chaleur de la(des) batterie(s) (cellules 2a,2b...) parte vers l'extérieur,
- FT4 : pour TB >= 35°C, évacuer vers l'extérieur la chaleur de la(des) batterie(s).

Quant au mode opératoire, on peut le définir comme suit :
a) Lorsque 25°C =< TA =< 35°C et 25°C =< TB =< 35°C et EB est OFF :
   L'interrupteur thermique 50 est non passant et la barrière 3 inactive.
b) Lorsque TA < 25°C et TB tend vers 25°C et EB est OFF :
   Les fonctions FT1 et FT3 sont mises en oeuvre. L'interrupteur thermique 50 est non passant et la barrière 3 devient active. De l'extérieur vers l'intérieur, les couches isolantes 5d,5c... jouent leur rôle, successivement. Les couches 3b2 puis 3b1 à MCP froids cristallisent quand leur température devient =< 25°C, ce qui retarde la propagation du froid vers la batterie. La chaleur accumulée par les cellules lors de leur fonctionnement reste préservée puisque l'arrivée du front froid est retardée par les couches 3b2, et les pertes retardées par celles 3b1 conservent TB au-dessus de la température de la plage basse de 25°C.
c) Lorsque TA >35°C et TB tend vers 35°C et EB est toujours OFF :
   La fonction FT2 est mise en oeuvre. L'interrupteur thermique 50 est toujours non passant et la barrière 3 est active. De l'extérieur vers l'intérieur, les couches isolantes 5d,5c jouent encore leur rôle, successivement. Les couches 3c2 puis 3c1 à MCP chauds fondent quand leur température devient =>35°C, ce qui retarde la propagation du chaud vers la batterie, par absorption de l'énergie chaude.
d) Lorsque EB passe ON, 25°C =< TA =< 35°C et 25°C =< TB =< 35°C :
   L'interrupteur thermique 50 est non passant et la barrière 3 inactive.
e) Lorsque EB est ON, 25°C =< TA =< 35°C et TB tend vers 35°C :
   La fonction FT4 est mise en oeuvre. Puisqu'on approche une température de batterie de 35°C, l'interrupteur thermique 50 devient passant via, dans l'exemple, les bilames métalliques qui assurent une conduction thermique. La barrière 3 devient active. En prévoyant des moyens de convection naturelle (ailettes et/ou circulation du fluide F dans les canaux 55, en particulier ceux adjacents à l'interrupteur thermique 50), on peut maintenir cette température TB autour de 35°C. A noter que les MCP froids se reliquéfiront quand la chaleur leur parviendra de la batterie (alors en fonctionnement ; EB ON).
f) Lorsque EB est ON, TA < 25°C et TB tend vers 35°C :
   La fonction FT4 est mise en oeuvre. La situation est comme ci-dessus, avec en outre l'effet assuré par le couches 3b, et en particulier 3b1, qui sont alors normalement à l'état liquide du fait de la chaleur transmise par la batterie. Si TA <25°C, les MCP chaud sont cristallisés au démarrage du véhicule ; ils ne pourront se liquéfier que si de la chaleur leur parvient de la batterie ou si l'environnement (compartiment de la batterie) passe au-dessus de 35°C et se recristalliseront ensuite à l'arrêt du fait de TA <25°C.
g) Lorsque EB est ON, TA >35°C et TB < 35°C :
   Il est supposé que la nuit la température extérieure TA est descendue en dessous de 25°C (les couches 3b2 ne fondant que si elles ont pu ainsi cristalliser). La fonction FT2 est mise en oeuvre. L'interrupteur thermique 50 est de nouveau non passant. La barrière 3 est active. De l'extérieur vers l'intérieur, les couches isolantes 5d,5c jouent leur rôle, successivement. Les couches 3c2 puis 3c1 à MCP chauds sont fondues. Si la nuit a été fraiche (TA<35°C, et typiquement TA <25°C), les couches ont cristallisé et fondront de nouveau au passage de l'air chaud en circulation.
h) Lorsque EB est ON, TA >35°C et TB tend vers 35°C :
   La fonction FT2 est encore mise en oeuvre. L'interrupteur thermique 50 est devient passant. La barrière 3 est active. Les couches isolantes 5d,5c...jouent leur rôle, successivement. Comme ci-dessus, les couches 3b2 puis 3b1 à MCP froids fondent quand leur température devient > 25°C. Prévus, les moyens précités de convection naturelle participent encore au retardement induit du flux thermique. Si la nuit a été fraiche (TA<35°C, et typiquement TA <25°C), les couches 3c2 puis 3c1 à MCP chauds ont cristallisées et fondront de nouveau au passage du flux chaud.
i) Lorsque EB est ON, TA >35°C et TB >35°C :
   La fonction FT4 est mise en oeuvre. L'interrupteur thermique 50 est passant. Les couches isolantes 5d,5c jouent toujours leur rôle, successivement. Il est possible qu'au niveau des moyens précités de convection naturelle, précisément l'air devant passer dans les canaux 55, il y ait nécessité de recourir à de l'air climatisé, à moins de 25°C.

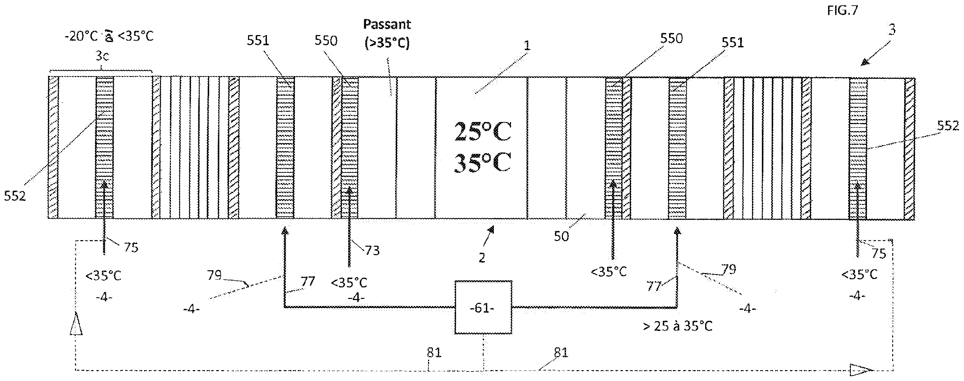

Concernant le mode opératoire de l'échange, de préférence par convection naturelle, assuré par le fluide F circulant dans les canaux 55 au sein des couches de MCP chauds 3c (cheminée 55a) et froids 3b1, on notera encore ce qui suit :
Concernant le mode opératoire de l'échange, de préférence par convection naturelle, assuré par le fluide F circulant dans les canaux ou cheminée 55 au sein des couches de MCP chauds 3c et froids 3b1, on notera encore ce qui suit :
Considérons d'abord la situation de la fig. 7. La batterie fonctionne. Elle produit donc de la chaleur. Il s'agit dans l'exemple d'une batterie de cellules prismatiques pour véhicule électrique, ayant donc entre 25 et 35°C comme plage de températures préférée à maintenir dans le volume 1, pour optimiser leur fonctionnement.

Scénario 1 : Il est supposé qu'après un arrêt long, par exemple une nuit où la température est descendue à 20°C, le véhicule 10, électrique et stationné dehors, redémarre et roule, propulsé donc par l'énergie produite par la batterie 2. La veille, le véhicule a été exposé à une température d'air extérieur 4 (environnant la barrière 3) supérieure à la plage 25°C/35°C précitée, par exemple 36°C derrière la carrosserie.

Le(s) MCP chaud(s) au moins de la couche 3c a(ont) pu cristalliser pendant la nuit (température(s) de changement d'états entre 30°C et 35°C, par exemple).

De l'air extérieur 4 peut être introduit par le conduit d'entrée 57 dans l'échangeur 552 pour activer la liquéfaction du/des MCP chaud(s) de la couche 3c. La chaleur libérée y est stockée. Du fait de cet échange convectif, l'air ressort de l'échangeur 552 plus froid qu'il y est entré. L'air et ensuite amené, par le conduit de raccordement 59 dans le deuxième échangeur 551 qui est entouré par du MCP froid (sous-couches 3b11,3b12 ayant une température de changement d'états du MCP supposée de 25°C, par exemple).

La température de la nuit ayant été de 20°C, une énergie dite froide aura pu être stockée dans le MCP de la couche 3b alors cristallisé. Au passage de l'air relativement chaud dans l'échangeur 551, ce MCP froid va redevenir à l'état liquide en absorbant une énergie prise à l'air en circulation. La température de l'air circulant dans l'échangeur 551 diminue.

Si la température de la nuit n'avait pas permis ce stockage d'énergie froide, une énergie de chauffage aurait été transformée uniquement sous forme d'énergie spécifique et aurait chauffé à la température de l'air le bloc MCP froid. La diminution de température de l'air apporté par le conduit 59 aurait été moins efficace et plus courte.

La combinaison d'un passage de l'air dans les MCP chaud(s) (stockage énergie chaude dans la couche 3c) et puis froid(s) (réchauffage du bloc 3b) a pour effet une baisse de température de l'air d'échange apporté.

En pratique, les choix des MCP et les dimensions des blocs de MCP chaud(s) et froid(s) 3c,3b pourront favorablement être définis pour assurer un service thermique pendant un temps moyen correspond à un usage moyen (< 1 h) du véhicule.

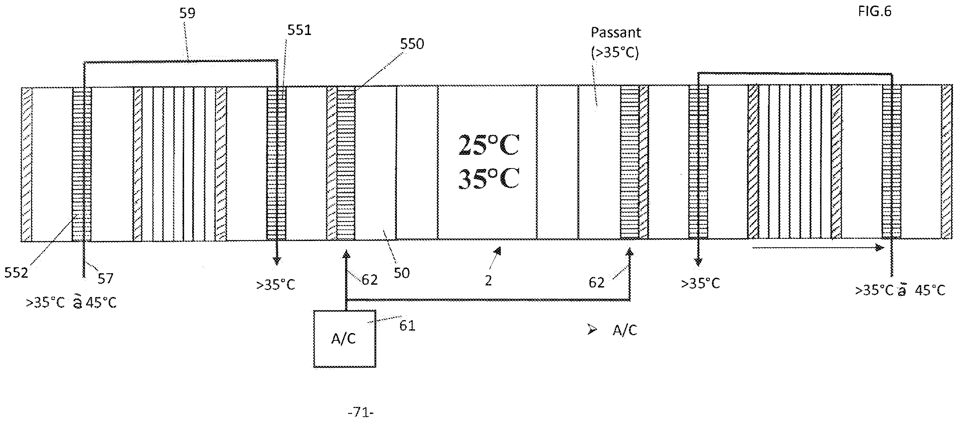

Un tel conditionnement autonome d'un air extérieur présentant une température supérieure à la température maximale de la plage pour la batterie 2 (35°C dans l'exemple) sera typiquement intéressant car permettant un fonctionnement sans recours au système thermodynamique 61 de conditionnement d'air (A/C) de l'habitacle 71 dont les véhicules sont souvent équipés (figure 6).

Tant que l'air conditionné par les conduits 57,59 présente une température inférieure à la température maximale de la plage à maintenir dans la batterie 2, un transfert thermique de la couche 3b vers l'échangeur 550 peut être assuré.

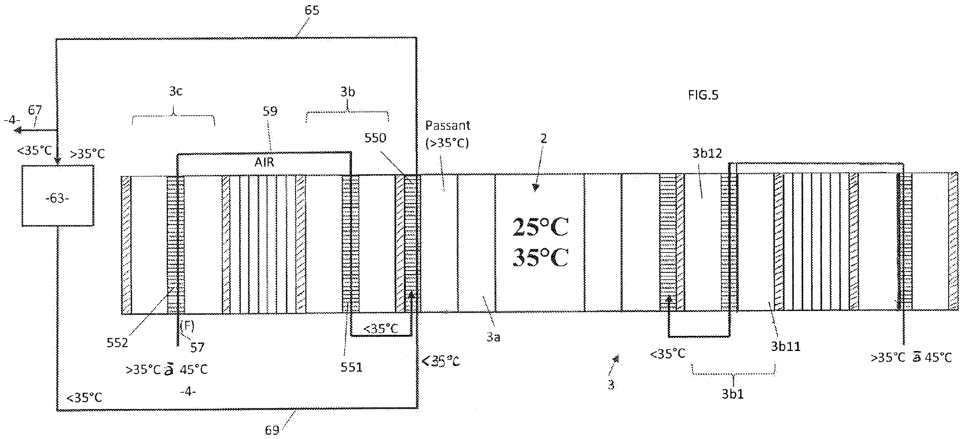

L'échangeur thermique extérieur 63, relié extérieurement à la barrière 3 à la sortie de l'échangeur 550 (conduit 65) et qui peut être de type air/air, est inactif. L'air passe successivement dans les trois échangeurs 552,551,550. Le renouvellement est à 100 %. L'air sortant de l'échangeur 550 est évacué en 67 vers l'extérieur 4, via le conduit 65 (figure 5).

Scénario 2 : Démarrage du véhicule 10 après un arrêt court; véhicule utilisé, puis arrêté 1 h par exemple.

Si le conditionnement autonome via la barrière 3 permet encore une entrée d'air dans l'échangeur 550 avec une température inférieure à la température maximale de la plage, le scénario 1 s'applique tant que Te< 35°C dans l'échangeur 550.

Si la situation ne le permet plus (Te > 35°C), alors l'échangeur 63 est activé. Un circuit fermé 69 de fluide s'établit, hors de la barrière 3, entre les échangeurs 63 et 550, l'échangeur thermique extérieur 63 évacuant la chaleur amenée dans l'échangeur 550 par l'air extérieur issu du conduit d'entrée 57 (figure 5).

Scénario 3 : Usage au-delà du conditionnement (Te≥35°C) ; figure 6.

Si les conditions de température de l'air extérieur demeurent proches (à 5°C près) de la température de liquéfaction du/des MCP chaud(s) de la couche 3c (30 à 35°C dans l'exemple) le scénario 2 s'applique, au moins dans un premier temps.

Toutefois, pour des conditions de température d'air extérieur très au-dessus de 35°C, l'échangeur 63 peut ne pas être suffisant.

L'échangeur 550 est alors alimenté directement par de l'air provenant de l'habitacle 71 du véhicule ou d'un air conditionné par le système thermodynamique de conditionnement d'air 61, via le conduit d'entrée de fluide 62.

Au moins l'échangeur 63 est donc court-circuité. Les échangeurs 552,551 peuvent toujours être alimentés par l'entrée d'air extérieur 57. La température d'air dans et en sortie du deuxième échangeur 551 est supérieure à la température maximale de la plage dans la batterie 2 (35°C dans l'exemple) et à celle de changement d'états du(des) MCP chaud(s) au moins de la couche 3c.

Scénario 4 (figure 7) : Il est supposé que la batterie 2 fonctionne encore et que la température de l'air extérieur est < 35°C, donc inférieure à la température maximale de la plage dans la batterie 2 et à celle de changement d'états du(des) MCP chaud(s) de la couche 3c.

De l'air extérieur issu du conduit d'entrée 73 peut alors directement circuler dans l'échangeur 550 pour y assurer le maintien des valeurs dans la plage de température. Il peut en être de même dans l'échangeur 552 : De l'air extérieur issu d'un autre conduit d'entrée 75 peut alors directement y circuler pour y assurer le maintien des valeurs dans la plage favorable de températures.

Pour de l'air extérieur > 25°C et < 35°C, une circulation d'air provenant du système thermodynamique 61 de conditionnement d'air de l'habitacle est assurée dans l'échangeur 551, via un conduit dédié 77, si la température de l'air extérieur 4 n'est pas descendue en dessous de 25°C pendant la nuit.

En cours d'usage de la batterie 2, si la température de l'air extérieur passe au-dessus de 35°C, alors le scénario 3 pourra être activé.

Pour une température d'air extérieur < 25°C, la circulation dans l'échangeur 551, via une entrée dédiée d'air extérieur 79, est activée directement.

Tant que la température d'air extérieur est < 35°C, la circulation de cet air dans l'échangeur 550 peut être autorisée. Lorsque la température extérieure devient > 35°C, alors le scénario 3 peut être activé.

Si dans la journée la température de l'air a été supérieure à 35°C, le(s) MCP chaud(s) de la couche ou bloc 3c ont été liquéfié(s) pour permettre un refroidissement de cet air chaud lors de sa circulation dans l'échangeur 552, via le conduit d'entrée 75. Aussi, si par exemple pendant la nuit l'air extérieur est descendu à une température < 35°C, son admission en début de journée dans l'échangeur 552 permettra une cristallisation dans ce bloc 3c. Si par contre, pendant la nuit et la journée suivante, la température extérieure ne descend pas en dessous de 35°C, cette cristallisation dans ce bloc 3c pourra s'effectuer avec l'aide du système thermodynamique 61 de conditionnement d'air de l'habitacle, via une circulation d'air dans un conduit extérieur supplémentaire 81.

Scénario 5 : La batterie 2 fonctionne. La température de l'air extérieur 4 est supposée < 20°C toute la journée et la nuit.

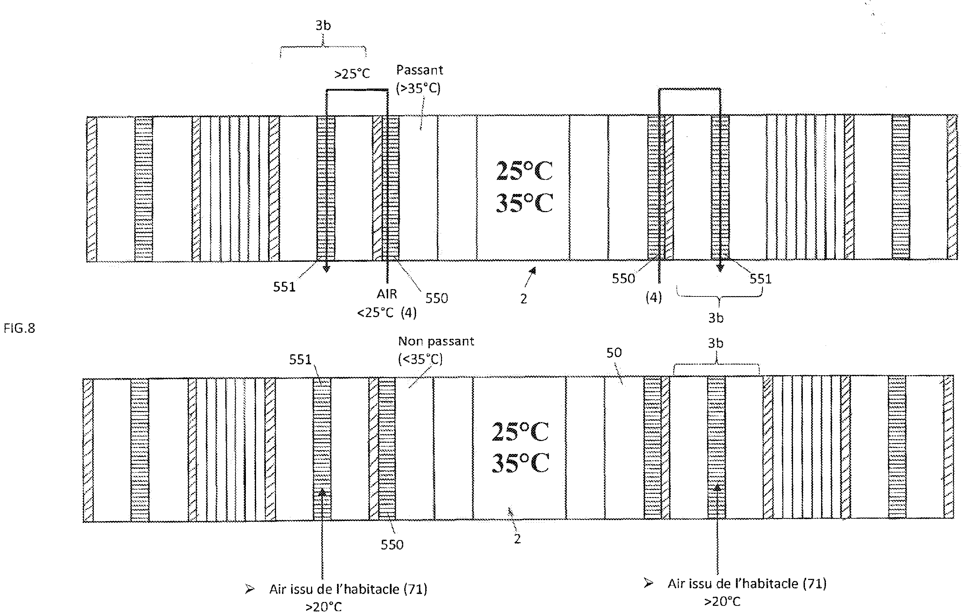

Le(s) MCP froid(s) de la couche ou bloc 3b est(sont) cristallisé(s). Il faut donc le(s) liquéfier pour le(s) réactiver afin de le(s) rendre fonctionnelle à l'arrêt suivant. La première possibilité est d'utiliser la production de chaleur provenant de la batterie qui permettra de repasser l'ensemble des blocs MCP froids au-dessus de 25°C (état liquide). Toutefois ceci ne fonctionnera que si la température de la batterie passe au-dessus de 35°C et nécessite par conséquence un refroidissement. L'air, issu de l'extérieur 4, à température < 20°C introduit dans l'échangeur 550 va se réchauffer et pourra être utilisé dans l'échangeur 551 pour réchauffer les blocs 3b (figure 8, schéma du haut). Si au bout d'un certain temps (10 minutes par exemple), la circulation dans l'échangeur 550 n'est toujours pas activée alors l'échangeur 551 sera alimenté par une prise d'air sur l'habitacle 71 qui du fait du chauffage permettra une circulation d'air supérieure à 25°C et donc une liquéfaction des blocs 3b (figure 8, schéma du bas).

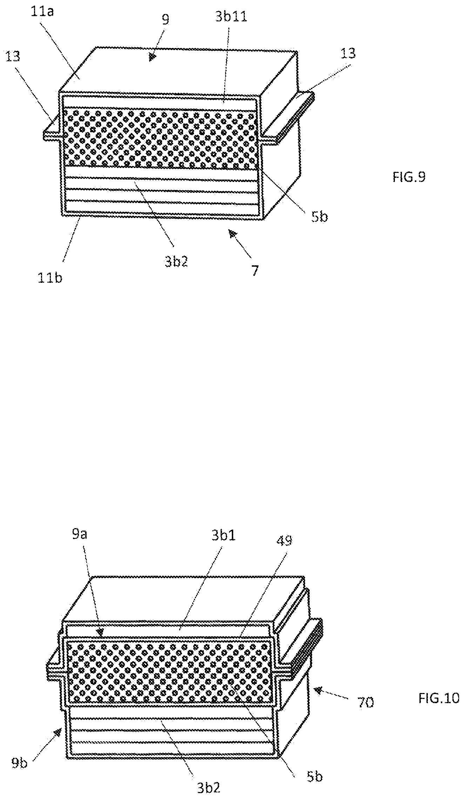

Concernant maintenant la réalisation de la barrière 3, on pourra s'inspirer des réalisations des figures 9 et 10 pour le conditionnement sous poches PIV 7 ou 70 de tout ou partie des éléments 3a-3c et 5a-5d.

Ainsi, figure 9, un regroupement dans l'exemple de la couche isolante 5b et des éléments à matériaux MCP respectivement 3b11 et 3b2 situés de part et d'autre est réalisé à l'intérieur d'une enveloppe unique 9, sous vide d'air partiel. L'enveloppe 9 peut être obtenue à partir de deux feuilles étanche 11a,11b. Chaque feuille peut être déformable, étanche aux gaz, par exemple en matière plastique et/ou ou aluminium laminé d'une épaisseur de l'ordre de quelques dizaines de micromètres, ou métallisé, avec par exemple avec un dépôt sous vide d'une épaisseur de l'ordre de quelques dizaines de nanomètres. Les feuilles 11a,11b seront typiquement périphériquement scellées, par exemple soudées, en 13. Ceci facilitera un moulage commun avec la paroi 6, si cela est souhaité. Les zones 13 pourront servir de liaison mécanique souple, articulable, entre deux poches 7 successives. A partir des figures 9,10 on peut d'ailleurs bien imaginer une ligne ou bande de poches 7,70 successives reliées deux à deux par ces parties 11 de liaison mécanique souple. Ceci pourra permettre de créer des angles, des coins, etc...

Dans la seconde réalisation (figure 10), la poche PIV 70 comprend une enveloppe sous vide, double (9a,9b). Au moins l'enveloppe intérieure 9a qui contient l'isolant thermique, ici 5b, est étanche aux gaz et sous vide d'air partiel. L'enveloppe extérieure 9b, qui renferme l'enveloppe intérieure 9a et les éléments à matériaux MCP, ici 3b11 et 3b2, peut être juste à fonction de réunion ou cohésion. La ou les feuilles qui le constitue peuvent être en un matériau non étanche. L'enveloppe 9b peut donc ne pas être intérieurement sous vide.

Concernant les d'éléments à MCP chauds et à MCP froids, respectivement, pour deux types de batteries par exemple, fonctionnant favorablement entre 25°C et 35°C et entre 45°C et 55°C (le tout à 15% près), on pourra en particulier utiliser des MCP encapsulés (typiquement micro-encapsulés) dans une matrice poreuse, à pores ouverts, de préférence de type élastomère, telle qu'à base de silicone NBR et HNBR.

On notera encore que tout MCP peut avoir un changement de phase ou d'état à un pic de température prédéterminé ou qui s'établit sur une plage de températures plus ou moins large. Ainsi, avec un MCP pur (tel qu'une paraffine) la température de changement d'état sera constante, tandis qu'elle pourra être non constante avec plusieurs MCP, tels que pour un mélange de paraffines.

De façon générale, les deux cas pouvant être rencontrés dans la présente demande en liaison avec le(s) MCP prévus, toute température de changement d'état de MCP sera ici à considérer dans une plage de 10°C, et typiquement à +/- 5°C.

## Revendications

1. Ensemble comprenant un dispositif (3) de gestion thermique pour favoriser, dans un volume intérieur (1), vis-à-vis de cellules (2a,2b...) de batterie électrique qui y sont disposées, un maintien d'une température dans une plage prédéterminée, ledit ensemble comprenant:
- ledit volume intérieur (1) et les cellules (2a,2b...) de batterie électrique,
- ledit dispositif, disposé autour de ce volume intérieur et placé dans un environnement extérieur (4,EXT) soumis à des températures comprises entre des températures respectivement inférieures et supérieures à ladite plage prédéterminée, le dispositif comprenant au moins un élément isolant thermique (5a,5b,5c,5d) formant une couche interposée entre le volume intérieur (1) et l'environnement extérieur (4), **caractérisé en ce qu'**il comprend: de l'intérieur, où est situé
ledit volume intérieur et/ou les cellules (2a,2b...) qui y sont disposées, vers l'extérieur où est situé l'environnement extérieur (4):
-- au moins un premier matériau MCP (3b; 3b1,3b2) à changement d'états entre liquide et solide, formant une autre couche, chaque premier matériau MCP ayant une température de changement d'état inférieure ou égale à la température la plus basse de ladite plage prédéterminée, pour, par changement d'états :
--- céder de la chaleur en cristallisant, retardant ainsi une propagation de froid de l'environnement extérieur vers le volume intérieur (1),
--- et absorber de la chaleur en se liquéfiant sous la chaleur produite par les cellules (2a,2b...), puis,
-- au moins un second matériau MCP (3a,3c) à changement d'états entre liquide et solide, différent du premier matériau MCP et formant encore une autre couche, chaque second matériau MCP ayant une température de changement d'état supérieure ou égale à la température la plus haute de ladite plage prédéterminée, pour, par changement d'états :
--- absorber de la chaleur en se liquéfiant, retardant ainsi une propagation de chaleur de l'environnement extérieur vers le volume intérieur (9),
--- et céder de la chaleur stockée, en cristallisant,
les premier(s) et second(s) matériaux MCP étant inclus, de l'intérieur vers l'extérieur, dans :
--- optionnellement un premier élément (3a) contenant au moins un dit second matériau MCP,
--- un second élément (3b) contenant plusieurs dits premiers matériaux MCP,
--- un troisième élément (3c) contenant au moins un dit second matériau MCP,
l'un au moins des second et troisième éléments (3b,3c) étant traversé par des canaux (55) de circulation d'un fluide à placer en échange thermique avec le(s) matériau(x) MCP.

2. Ensemble selon la revendication 1, où lesdits premier et/ou second matériaux MCP (3a,3b,3c) comprennent individuellement plusieurs matériaux MCP à températures de changement d'états différentes.

3. Ensemble selon l'une des revendications précédentes, où ledit au moins un élément isolant thermique (5a,5b,5c,5d) est interposé entre les premier(s) et second(s) matériaux MCP.

4. Ensemble selon l'une des revendications précédentes, où ledit au moins un élément isolant thermique (5a,5b,5c,5d) est disposé dans une enveloppe sous vide (9,9a), pour définir au moins un panneau isolant sous atmosphère contrôlée, PIV (7,70).

5. Ensemble selon l'une des revendications précédentes, comprenant en outre une couche formant interrupteur thermique (50) disposée entre le premier élément (3a) contenant un matériau MCP et certains des canaux (55) de circulation d'un fluide de refroidissement.

6. Ensemble selon l'une des revendications précédentes, où l'un au moins des second et troisième éléments (3b,3c) comprend plusieurs matériaux MCP dispersés ou plusieurs couches de matériaux contenant chacune un matériau MCP, lesdits matériaux MCP ayant des températures de changement d'état différentes les unes des autres.

7. Ensemble selon la revendication 6, où ladite plage de températures prédéterminée à maintenir est comprise entre 25°C et 35°C, à 5°C près.

8. Ensemble selon l'une des revendications précédentes où, de l'intérieur vers l'extérieur, les matériaux MCP des second et/ou troisième éléments (3b,3c) ont des températures de changement d'état qui croissent.

9. Ensemble selon l'une des revendications précédentes, où le premier élément (3a) définit une couche déformable adaptée à absorber une déformation des moyens (2) producteur temporaire de chaleur et à absorber thermiquement des points chauds qu'ils auraient induits.

10. Véhicule comprenant l'ensemble selon l'une des revendications précédentes.

11. Véhicule selon la revendication 10 comprenant en outre un conduit d'entrée (57) permettant à de l'air extérieur de pouvoir être introduit dans ledit troisième élément (3c), qui forme échangeur thermique (552), à une température adaptée pour liquéfier ledit au moins un second matériau MCP.

12. Véhicule selon la revendication 10 ou 11 :
- comprenant en outre un habitacle (71) et un système thermodynamique de conditionnement d'air (61), et
- dans lequel ledit second élément (3b), qui forme échangeur thermique (550), est relié directement à une alimentation en air provenant de l'habitacle (71) ou du système thermodynamique de conditionnement d'air (61), via un conduit (62) d'entrée de fluide dans ledit second élément (3b).

## Patentansprüche

1. Anordnung mit einer Wärmemanagementvorrichtung (3), um in einem Innenraum (1) gegenüber darin angeordneten elektrischen Batteriezellen (2a, 2b ...) die Aufrechterhaltung einer Temperatur in einem vorbestimmten Bereich zu fördern,
wobei die Anordnung enthält:
- den Innenraum (1) und die elektrischen Batteriezellen (2a, 2b ...),
- die Vorrichtung, die um diesen Innenraum herum angeordnet ist und sich in einer Außenumgebung (4, EXT) befindet, die Temperaturen ausgesetzt ist, die zwischen jeweils unterhalb bzw. oberhalb des vorbestimmten Bereichs liegenden Temperaturen liegen, wobei die Vorrichtung zumindest ein wärmeisolierendes Element (5a, 5b, 5c, 5d) umfasst, das eine Schicht bildet, die zwischen dem Innenraum (1) und der Außenumgebung (4) eingefügt ist,
**dadurch gekennzeichnet, dass** sie von innen, wo sich der Innenraum und/oder die darin angeordneten Zellen (2a, 2b ...) befinden, nach außen, wo sich die Außenumgebung (4) befindet, enthält:
-- zumindest ein erstes PCM-Material (3b; 3b1, 3b2) mit Zustandsänderungen zwischen flüssig und fest, das eine weitere Schicht bildet, wobei jedes erste PCM-Material eine Zustandsänderungstemperatur hat, die kleiner oder gleich der niedrigsten Temperatur in dem vorbestimmten Bereich ist, um durch Zustandsänderungen
--- Wärme abzugeben, indem es kristallisiert, wodurch eine Kälteausbreitung von der Außenumgebung zum Innenraum (1) verzögert wird,
--- und Wärme aufzunehmen, indem es sich unter der von den Zellen (2a, 2b ...) erzeugten Wärme verflüssigt,
-- zumindest ein zweites PCM-Material (3a, 3c) mit Zustandsänderungen zwischen flüssig und fest, das sich von dem ersten PCM-Material unterscheidet und noch eine weitere Schicht bildet, wobei jedes zweite PCM-Material eine Zustandsänderungstemperatur hat, die höher oder gleich der höchsten Temperatur in dem vorbestimmten Bereich ist, um durch Zustandsänderungen
--- Wärme aufzunehmen, indem es sich verflüssigt, wodurch eine Wärmeausbreitung von der Außenumgebung zum Innenraum (9) verzögert wird,
--- und gespeicherte Wärme abzugeben, indem es kristallisiert,
wobei das erste und zweite PCM-Material bzw. die ersten und zweiten PCM-Materialien von innen nach außen eingeschlossen sind in:
--- optional einem ersten Element (3a), das zumindest ein zweites PCM-Material enthält,
--- einem zweiten Element (3b), das mehrere erste PCM-Materialien enthält,
--- einem dritten Element (3c), das zumindest ein zweites PCM-Material enthält,
wobei zumindest eines aus zweitem und drittem Element (3b, 3c) von Kanälen (55) zur Zirkulation eines Fluids durchsetzt ist, das in Wärmeaustausch mit dem/den PCM-Material(en) anzuordnen ist.

2. Anordnung nach Anspruch 1,
wobei das erste und/oder das zweite PCM-Material (3a, 3b, 3c) einzeln mehrere PCM-Materialien mit unterschiedlichen Zustandsänderungstemperaturen umfassen.

3. Anordnung nach einem der vorhergehenden Ansprüche,
wobei das zumindest eine wärmeisolierende Element (5a, 5b, 5c, 5d) zwischen dem bzw. den ersten und zweiten PCM-Material(ien) angeordnet ist.

4. Anordnung nach einem der vorhergehenden Ansprüche,
wobei das zumindest eine wärmeisolierende Element (5a, 5b, 5c, 5d) in einer Vakuumhülle (9, 9a) angeordnet ist, um zumindest ein VIP-Schutzatmosphären-Isolationspaneel (7, 70) zu definieren.

5. Anordnung nach einem der vorhergehengen Ansprüche,
ferner enthaltend eine thermische Schalterschicht (50), die zwischen dem ersten Element (3a), das ein PCM-Material enthält, und bestimmten der Kanäle (55) für die Zirkulation eines Kühlfluids angeordnet ist.

6. Anordnung nach einem der vorhergehenden Ansprüche,
wobei zumindest eines aus zweitem und drittem Element (3b, 3c) mehrere dispergierte PCM-Materialien oder mehrere Materialschichten, die jeweils ein PCM-Material enthalten, umfasst, wobei die PCM-Materialien voneinander abweichende Zustandsänderungstemperaturen aufweisen.

7. Anordnung nach Anspruch 6,
wobei der vorbestimmte, einzuhaltende Temperaturbereich zwischen 25 °C und 35 °C, ± 5°, liegt.

8. Anordnung nach einem der vorhergehenden Ansprüche,
wobei die PCM-Materialien des zweiten und/oder dritten Elements (3b, 3c) von innen nach außen ansteigende Zustandsänderungstemperaturen aufweisen.

9. Anordnung nach einem der vorhergehenden Ansprüche,
wobei das erste Element (3a) eine verformbare Schicht definiert, die geeignet ist, eine Verformung der zeitweilig wärmeerzeugenden Mittel (2) zu absorbieren und von ihnen gegebenenfalls hervorgerufene Hotspots thermisch zu absorbieren.

10. Fahrzeug mit einer Anordnung nach einem der vorhergehenden Ansprüche.

11. Fahrzeug nach Anspruch 10,
ferner enthaltend eine Einlassleitung (57), durch welche Außenluft in das einen Wärmetauscher (552) bildende dritte Element (3c) mit einer Temperatur eingeleitet werden kann, die geeignet ist, das zumindest eine zweite PCM-Material zu verflüssigen.

12. Fahrzeug nach Anspruch 10 oder 11,
- ferner enthaltend einen Fahrgastraum (71) und eine thermodynamische Klimaanlage (61),
- wobei das einen Wärmetauscher (550) bildende zweite Element über eine Einlassleitung (62) zum Einlass von Fluid in das zweite Element (3b) direkt mit einer Luftzufuhr aus dem Fahrgastraum (71) oder aus der thermodynamischen Klimaanlage (61) verbunden ist.

## Claims

1. An assembly comprising a thermal management device (3) in order to encourage, within an internal volume (1), with respect to electric battery cells (2a,2b...) arranged therein, maintenance of a temperature within a predetermined range, wherein the assembly comprises:
- said internal volume (1) and the electric battery cells (2a,2b...),
- said device, arranged around this internal volume and placed in an external environment (4,EXT) subject to temperatures included between temperatures respectively lower than and higher than said predetermined range, wherein the device comprises at least one thermally insulating element (5a,5b,5c,5d) forming a layer interposed between the internal volume (1) and the external environment (4),
the assembly being **characterised in that** it comprises, from the inside, where said internal volume is located and/or the cells (2a,2b...) arranged therein, towards the outside where the external environment is located (4):
- at least one first PCM material (3b; 3b1,3b2) having a change of state between liquid and solid, wherein each first PCM material has a change-of-state temperature less than or equal to the lowest temperature of said predetermined range, intended, by change of state, to:
--- yield heat by crystallising, thereby delaying propagation of cold from the external environment towards the internal volume (1),
--- and absorb heat by liquefying under the influence of the heat produced by the cells (2a,2b...), then,
- at least one second PCM material (3a,3C) having a change of state between liquid and solid, different from the first PCM material and forming yet another layer, wherein each second PCM material has a change-of-state temperature greater than or equal to the highest temperature of said predetermined range, intended, by change of state, to:
--- absorb heat by liquefying, thereby delaying propagation of heat from the external environment towards the internal volume (9),
--- and yield stored heat, by crystallising,
wherein said first and second PCM materials are included, from the inside towards the outside, in:
--- optionally a first element (3a) containing at least one said second PCM material,
--- a second element (3b) containing several said first PCM materials,
--- a third element (3c) containing at least one said second PCM material, and,
wherein at least one of the second and third elements (3b, 3c) is crossed by fluid circulation channels (55), in thermal exchange with the PCM material(s).

2. Assembly according to claim 1, wherein said first and/or second PCM materials (3a,3b,3c) individually comprise several PCM materials with different change-of-state temperatures.

3. Assembly according to any of the preceding claims, wherein said at least one thermally insulating element (5a,5b,5c,5d) is interposed between the first and second PCM materials.

4. Assembly according to any of the preceding claims, wherein said at least one thermally insulating element (5a,5b,5c,5d) is arranged in a vacuum enclosure (9,9a), in order to define at least one controlled atmosphere insulating panel, VIP (7,70).

5. Assembly according to any of the preceding claims, further comprising a layer forming a thermal switch (50) arranged between the first element (3a) containing a PCM material and channels (55) for circulation of a cooling fluid.

6. Assembly according to any of the preceding claims, wherein at least one of the second and third elements (3b,3c) comprises several dispersed PCM materials or several layers of material, each containing a PCM material, with said PCM materials having change-of-state temperatures different from one another.

7. Assembly according to claim 6, wherein said predetermined temperature range to be maintained is between 25°C and 35°C, to within 5°C.

8. Assembly according to any of the preceding claims, wherein, from the inside towards the outside, the PCM materials of the second and/or third elements (3b,3c) have change-of-state temperatures that increase.

9. Assembly according to any of the preceding claims, wherein the first element (3a) defines a deformable layer adapted to absorb deformation of the temporary heat production means (2) and thermally absorb any hot spots which they may have caused.

10. A vehicle comprising the assembly according to any of the preceding claims.

11. Vehicle according to claim 10 further comprising an inlet duct (57) allowing outside air to be introduced into the third element (3c), which forms a thermal exchanger (552), at a temperature adapted to liquefy said at least one second PCM material.

12. Vehicle according to claim 10 or 11:
- further comprising a passenger compartment (71) and an air conditioning thermodynamic system (61), and
- in which said second element (3b), which forms a thermal exchanger (550), is directly connected to an inlet for air provided by the passenger compartment (71) or through the air conditioning thermodynamic system (61), by means of a duct (62) for a fluid inlet into said second element (3b).
